Europäisches Patentamt

(19) European Patent Office

Office européen des brevets

(11) Publication number: **0 027 345**

**A1**

(12) # EUROPEAN PATENT APPLICATION

(21) Application number: **80303519.5**

(22) Date of filing: **07.10.80**

(51) Int. Cl.³: **B 23 P 1/08**

(30) Priority: **13.10.79 JP 132278/79**

(43) Date of publication of application:
**22.04.81 Bulletin 81/16**

(84) Designated Contracting States:
**AT BE CH DE FR GB IT LI LU NL SE**

(71) Applicant: **FUJITSU FANUC LIMITED**
5-1, Asahigaoka, 3-chome
Hino-shi, Tokyo 191(JP)

(72) Inventor: **Obara, Haruki**
No. 844-7, Hashimoto Sagamihara-shi
Kanagawa, 229(JP)

(72) Inventor: **Izumiya, Syunzo**
No. 1097, 4-7-302, Date-machi
Hachioji-shi Tokyo, 193(JP)

(74) Representative: **Bedggood, Guy Stuart et al,**
Haseltine Lake & Co. Hazlitt House 28 Southampton
Buildings Chancery Lane
London WC2A 1AT(GB)

(54) **A power source for a wire-cut electric discharge machine, and such a machine including the power source.**

(57) The power source has a comparator $COMP_1$ for comparing the power source voltage $Vs$ (as detected by voltage divider resistors $R_2$, $R_3$) with a reference voltage $V$ to detect when the former $Vs$ has risen in excess of a predetermined value $V$, and a switching element $Q_2$ connected in parallel to the power source via resistor $R_4$. The switching element $Q_2$ is made conductive by the output from the comparator $COMP_1$ when $Vs$ is in excess of $V$, to rapidly reduce the power source voltage.

FIG. I

EP 0 027 345 A1

-1-

## A POWER SOURCE FOR A WIRE-CUT ELECTRIC DISCHARGE MACHINE, AND SUCH A MACHINE INCLUDING THE POWER SOURCE.

The present invention relates to a power source for a wire-cut electric discharge machine, and such a machine including the power source.

In general , voltage fluctuation between a wire electrode and a workpiece in a wire-cut electric discharge machine causes variation in machining characteristics. To retain a desired machining characteristic, it is necessary to stabilize the power source for machining, but in this case, if the power source cannot respond sufficiently well to load variations in the discharging part of the wire-cut electric discharge machine, an accident such as the breakage of the wire or the like can occur. When the workpiece is short-circuited with the wire, it has been general practice to immediately cut off a current flowing across the wire and the workpiece, in order to repair the short-circuit, and then to apply a current across them for re-starting machining operation, but in such a case, if the response of the power source is not sufficient, the power source voltage may rise temporarily due to the cutting off of the current and the machining operation can be resumed under such a high voltage condition, resulting in the wire electrode being readily broken.

According to the present invention there is provided a power source, for a wire-cut electric discharge machine in which a voltage is applied across a wire electrode and a workpiece to machine the latter by an electric discharge, characterised by a comparator for comparing power source voltage with a reference voltage, for detecting when the power source voltage rises higher than a predetermined voltage value, and a switching element connected via a resistance across the power source and arranged so as to become conductive when the comparator detects that the power source voltage is higher than the predetermined voltage value.

An embodiment of the present invention can provide a power source suitable for use with a wire-cut electric discharge machine.

An embodiment of the present invention can provide a power source for a wire-cut electric discharge machine which has improved responsivity, to avoid breakage of a wire electrode when re-starting machining between a wire electrode and a workpiece.

The power source is adapted to prevent breakage of a wire electrode which might otherwise be caused when re-starting machining of a workpiece in a state in which the power source voltage is higher than a predetermined voltage.

An embodiment of the present invention can provide a power source for a wire-cut electric discharge machine which permits smooth electric discharge machining.

Briefly, a power source embodying the present invention, for use with a wire-cut electric discharge machine, includes a comparator for comparing a power source voltage with a reference voltage to detect an increase in the power source voltage in excess of a predetermined value, and one or more transistors, or like switching elements, each connected in parallel with the power source via resistor. The switching element or elements operate on the detected

-3-

output from the comparator to connect the resistors in parallel to the power source, whereby the power source voltage, if raised to a high level, drops immediately or rapidly, thus preventing breakage of the wire when the machining operation is resumed.

Reference is made, by way of example, to the accompanying drawings, in which:-

Fig. 1 is an electric circuit diagram illustrating principal parts of an embodiment of the present invention;

Fig. 2 is a circuit diagram of an example of a control circuit for controlling the ON-OFF operation of a switching element $Q_1$ of Fig. 1; and

Fig. 3 comprises waveform diagrams illustrating load current I and power source voltage $V_S$ during the operation of the circuit depicted in Fig. 1.

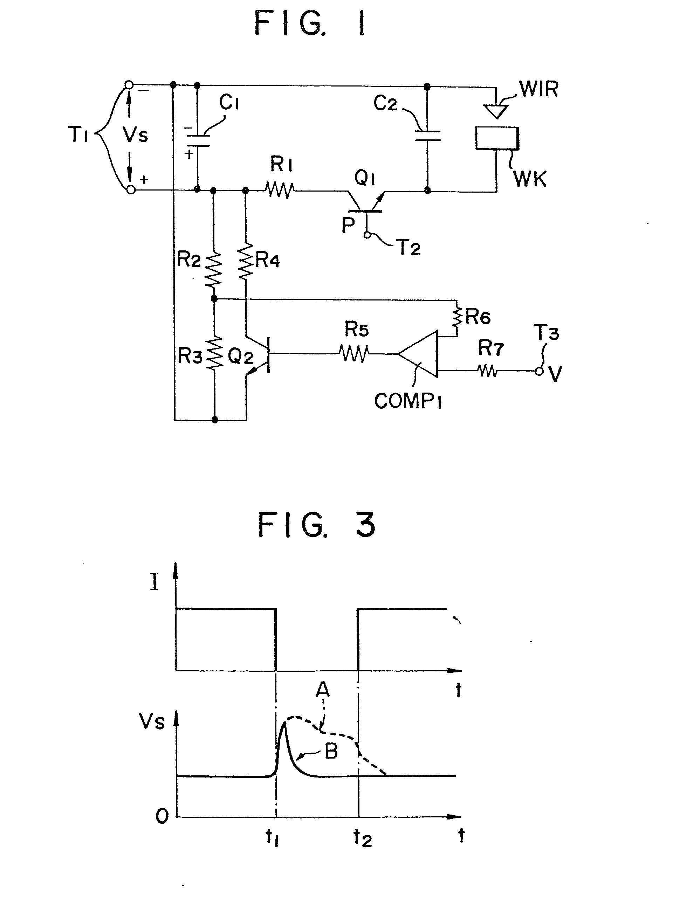

In Fig. 1 WIR is a wire electrode, WK is a workpiece, $T_1$ is a power source terminal to which is connected a DC power source for providing a voltage $V_S$, $Q_1$ is a transistor or like switching element for discharge control use, $T_2$ is an input terminal to which control pulses P are applied, $C_1$ and $C_2$ are capacitors, $R_1$ to $R_7$ are resistors, $T_3$ is an input terminal to which a reference voltage V is applied, $COMP_1$ is a comparator, and $Q_2$ is a switching element such as a transistor or the like. A power source (not shown) and the discharge control switching element $Q_1$ are connected in series with the wire electrode WIR and the workpiece WK, and the switching element $Q_1$ is repeatedly turned ON and OFF by the control pulses P, charging the capacitor $C_2$ via the resistor $R_1$ from charges stored in the capacitor $C_1$ with a polarity +, - as indicated in Fig. 1. Charging voltage is applied across the wire electrode WIR and the workpiece WK and discharge current from the capacitor $C_2$ flows as a discharge into the (air) gap defined between the wire electrode WIR and the workpiece WK, thus performing electric discharge machining.

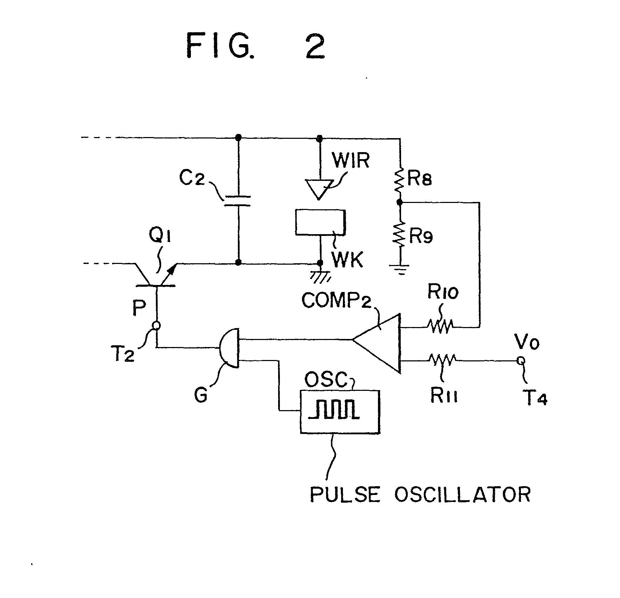

The power source circuit is arranged so that a load current supplied across the wire electrode WIR and the workpiece WK is temporarily cut off by a control circuit (not shown) during short-circuiting of the wire electrode WIR and the workpiece WK. Such an arrangement is well known in the art and an example of the arrangement is shown in Figure 2, in which the switching element $Q_1$, the capacitor $C_1$, the workpiece WK and the wire electrode WIR are the same as those shown in Figure 1. In Figure 2, $R_8$ to $R_{11}$ are resistors, $COMP_2$ is a comparator, G is an AND circuit, OSC is a control pulse oscillator, and $T_4$ is a terminal to which a reference voltage $V_0$ is applied.

The switching element $Q_1$ is normally turned ON and OFF repeatedly by control pulses applied via the AND circuit G from the control pulse oscillator OSC. When the wire electrode WIR and the workpiece WK are short-circuited, a voltage across the machining gap between them rapidly drops, and the short-circuiting is detected by the comparator $COMP_2$ for comparing the voltage across the machining gap with the reference voltage $V_0$ and the detection output of the comparator is provided to the AND circuit G to close it. As a consequence, the supply of the control pulses P is interrupted and the switching element $Q_1$ is held in the OFF state, cutting off the load current I supplied across the wire WIR and the workpiece WK.

In Figure 1, the voltage $V_S$ supplied from the power source is divided by the resistors $R_2$ and $R_3$ connected across the power source terminal $T_1$, and the voltage-divided output is applied via the resistor $R_6$ to one input terminal of the comparator $COMP_1$, which is supplied at its other input terminal with the reference voltage V. In the comparator $COMP_1$, the voltage-divided value of the voltage $V_S$ and the reference voltage V are compared, and when the former is larger than the latter, the switching

element $Q_2$ is turned ON by the detection output from the comparator $COMP_1$. Since the switching element $Q_2$ is connected across the power source terminal $T_1$ via the resistor $R_4$, when the switching element $Q_2$ conducts, the voltage $V_S$ is rapidly reduced by the resistor $R_4$.

For example, in the case where the load current I supplied across the wire electrode WIR and the workpiece WK is cut off at a moment $t_1$ (see Figure 3) because of short-circuiting, the voltage $V_S$ rises sharply in the prior art, as indicated by the broken line A in Figure 3. In this state, if the load current I is applied at a moment $t_2$ to re-start machining, the wire electrode WIR may be broken, as mentioned previously. In the present embodiment of this invention, however, the rise of the voltage $V_S$ is detected by the comparator $COMP_1$ and the switching element $Q_2$ is turned ON, so that the voltage $V_S$ rapidly drops, as indicated by the solid line B in Figure 2, and is stable at a predetermined voltage level when machining is re-started  This ensures prevention of wire electrode breakage at the re-starting of machining.

As has been described in the foregoing, according to the present invention, when an increase in the power source voltage is detected, a switching element connected in parallel with the power source via a resistor is made conductive thereby to rapidly reduce the increased voltage, by which it is possible to prevent problems such as breakage of a wire electrode when re-starting machining, thus ensuring smooth electric discharge machining.

It will be apparent that many modifications and variations may be effected without departing from the scope of the novel concepts of the present invention.

CLAIMS

1.  A power source, for a wire-cut electric discharge machine in which a voltage is applied across a wire electrode and a workpiece to machine the latter by an electric discharge, characterised by a comparator for comparing power source voltage with a reference voltage, for detecting when the power source voltage rises higher than a predetermined voltage value, and a switching element connected via a resistance across the power source and arranged so as to become conductive when the comparator detects that the power source voltage is higher than the predetermined voltage value.

2.  A wire-cut electric discharge machine including a power source as claimed in claim 1.

1/2

## FIG. 1

## FIG. 3

2/2

FIG. 2

PULSE OSCILLATOR

European Patent
Office

**EUROPEAN SEARCH REPORT**

Application number

EP 80 30 3519

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | FR - A - 1 550 107 (INSTITUT STANKOV)<br><br>  * Page 2, column 1 *<br><br>& US - A - 3 487 262<br><br>-- | 1,2 | B 23 P 1/08 |
| P | PATENTS ABSTRACTS OF JAPAN, vol. 4, ·no. 9, 23rd January, 1980, page 142 M 89<br><br>& JP - A - 54 147594 (MITSUBISHI DENKI K.K.)(17-11-1979)<br><br>. ---- | 1,2 | |

**TECHNICAL FIELDS SEARCHED (Int. Cl.³)**

B 23 P 1/08

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

The present search report has been drawn up for all claims

| Place of search | Date of completion of the search | Examiner |
|---|---|---|
| The Hague | 14-01-1981 | DAILLOUX |

EPO Form 1503.1  06.78